Europäisches Patentamt

European Patent Office

Office européen des brevets

(19)

(11) Veröffentlichungsnummer: **0 162 258**
**B1**

(12) **EUROPÄISCHE PATENTSCHRIFT**

(45) Veröffentlichungstag der Patentschrift:
28.06.89

(51) Int. Cl.⁴: **G 01 S 13/94**, G 01 S 7/28

(21) Anmeldenummer: 85104212.7

(22) Anmeldetag: 06.04.85

(54) **Radaranordnung.**

(30) Priorität: 14.04.84 DE 3414158

(43) Veröffentlichungstag der Anmeldung:
27.11.85 Patentblatt 85/48

(45) Bekanntmachung des Hinweises auf die Patenterteilung: 28.06.89 Patentblatt 89/26

(84) Benannte Vertragsstaaten:
DE FR GB IT

(56) Entgegenhaltungen:
DE–A– 2 801 371
DE–A– 2 821 401
US–A– 4 106 015
IEE PROCEEDINGS, Band 129, Nr. 2, Teil F, April 1982, Seiten 73-78, Old Woking, Surrey, GB; N.A. STEWART: "Use of crosspolar returns to enhance target detectability"
M.I. SKOLNIK: "Radar Handbook", 1970, Seiten 29-14 - 29-23, McGraw-Hill Book Co., New York, US;

(73) Patentinhaber: Licentia Patent-Verwaltungs-GmbH
Theodor-Stern-Kai 1
D-6000 Frankfurt/Main 70 (DE)

(72) Erfinder: Jehle, Franz, Dipl.-Ing.
Fünf-Bäume-Weg 148
D-7900 Ulm (DE)
Erfinder: König, Martin, Dr. Dipl.-Phys.
Zankerstrasse 43
D-8871 Günzburg (DE)
Erfinder: Wölfle, Erwin, Dr. Dipl.-Phys.
Turmstrasse 18
D-7930 Ehingen (DE)

(74) Vertreter: Amersbach, Werner, Dipl.-Ing. et al
Licentia Patent-Verwaltungs-GmbH Theodor-Stern-Kai 1
D-6000 Frankfurt 70 (DE)

**Beschreibung**

Die Erfindung betrifft eine Radaranordnung der im Oberbegriff des Patentanspruchs 1 angegebenen Art.

Radarechos von Regen können bei der Auswertung in Radaranlagen fälschlicherweise als Zielmeldung interpretiert werden und zu falschen Maßnahmen Anlaß geben. Insbesondere bei Geländefolge-Radarsystemen können sich daraus folgenschwere Fehlreaktionen ergeben.

Zur automatischen Steuerung tiefliegender Flugzeuge werden Geländefolge-Radarsysteme eingesetzt, die den Abstand zum Erdboden kontrollieren und den in Flugrichtung gelegenen Raum auf Hindernisse überwachen. Bei Auftauchen eines Ziels in Flugrichtung wird dieses als Hindernis interpretiert und automatisch ein Ausweichmanöver eingeleitet. Echos aus der Flugrichtung treten aber auch bei Regen auf, so daß das Flugzeug durch die automatische Steuerung über alle Wolken stiege. Um die Beeinflussung der Flugbahnsteuerung durch vom Regen herrührenden Echos, die ein Hindernis vortäuschen auszuschalten, ist es bekannt zirkular polarisierte Strahlung auszusenden und nur zur ausgesandten Strahlung gleichsinnig polarisierte Strahlungsanteile zu empfangen. Dem liegt die Erkenntnis zugrunde, daß der Polarisationsdrehsinn bei der Reflektion der Strahlung an Regentropfen weitgehend umgekehrt wird, so daß Regenechos durch polarisationsselektive Empfangseinrichtungen unterdrückt werden können.

Aus IEE Proceedings Band 129, Nr. 2, Teil F, April 1982, Seiten 73-78, Old Woking, Surrey, GB ; N. A. STEWART : « Use of cross polar returns to enhance target detectability » ist ein Radarsystem bekannt, bei welchem eine Radarantenne zirkular polarisierte Wellen abstrahlt und die über dieselbe Antenne empfangenen Echosignale in bezüglich der Polarisation der abgestrahlten Wellen gleichsinnig zirkular und gegensinnig zirkular polarisierte Anteile aufspaltet. Die beiden Signalanteile werden in parallelen Empfangskanälen verarbeitet und einem Rechner zugeführt. Für die Zielentdeckung in Bodenclutter kann durch Auswertung beider Kanäle eine Verbesserung des Signal/Rausch-Verhältnisses erreicht werden.

In der DE-A-2 821 401 ist neben anderem angegeben, daß zur Unterscheidung von Echos von echten Zielen und von Regen Signale unterschiedlichen Polarisationssinns ausgewertet werden können. Für die unterschiedlich polarisierten Signale können sowohl eine gemeinsame Antenne mit einem Mehrfach-Polarisationskoppler als auch getrennte Antennen für jede Polarisation vorgesehen sein. Aus der Größe des Amplitudenverhältnisses wird ein Gatter-Signal abgeleitet, das die Videosignale entweder zur weiteren Auswertung freigibt oder sperrt, so daß z. B. Regenechos, die bei Einsatz zirkular polarisierter Wellen stärker in der zur Sendepolarisation gegensinnigen Polarisation als in der gleichsinnigen Polarisation auftreten, durch Pegelvergleich der beiden Polarisationsanteile in den Echos unterdrückt werden können.

Der Erfindung liegt die Aufgabe zugrunde, einen vorteilhaften Aufbau einer Radaranordnung der im Oberbegriff des Patentanspruchs 1 beschriebenen Art anzugeben, der sich insbesondere auch durch geringes Gewicht und geringen Platzbedarf auszeichnet und dadurch für den Einsatz in Flugzeugen geeignet ist.

Die Erfindung ist im Patentanspruch 1 beschrieben. Die Unteransprüche enthalten vorteilhafte Ausführungsformen und Weiterbildungen der Erfindung.

Sende-Empfangs-Richtantennen mit einem scharf gebündelten, innerhalb eines vorgegebenen Raumwinkelbereichs vorzugsweise elektronisch und in zwei Dimensionen schwenkbaren Antennenrichtdiagramm sind an sich bekannt und vor allem in Flugzeugen eingesetzt, wo eine dreidimensionale Auflösung des von der Radaranordnung überwachten Raums von besonderer Bedeutung ist.

Der gemäß der Erfindung für eine verbesserte Unterdrückung von Regenechos vorgesehene zusätzliche Aufwand ist gering, da die zusätzliche Antenne nur zum Signalempfang vorgesehen ist und ihr Antennendiagramm nicht geschwenkt wird und auch nicht scharf gebündelt ist. Sie kann daher beispielsweise als billiger und platz- und gewichtssparender Hornstrahler oder offener Hohlleiterstrahler ausgeführt sein. Dies macht die Erfindung darüber hinaus auch besonders geeignet für die Ergänzung bestehender Radaranordnungen.

Die Erfindung macht Gebrauch von den aus dem Stand der Technik bekannten Unterschieden im Polarisationsverhalten zwischen echten Radarzielen oder Bodenechos einerseits und Regen andererseits.

In dem Vorgehen bei der DE-A-2 821 401 analoger Weise werden beim Empfang über die zusätzliche Antenne die Regenechos durch polarisationsselektive Maßnahmen nicht unterdrückt, sondern gegenüber anderen Signalen gezielt bevorzugt. Damit liegt eine weite Information vor, aus der durch Pegelvergleich eine zuverlässige Entscheidung, ob ein Empfangssignal von einem Regengebiet herrührt oder nicht, abgeleitet werden kann. Die von einem echten Hindernis reflektierte Strahlung zeigt im allgemeinen keine bevorzugte Polarisation, so daß das Verhältnis der Signalpegel dem Verhältnis der Antennenempfindlichkeiten entspricht.

Für Regenechos wird dieses Pegelverhältnis zugunsten des Empfangssignals der zusätzlichen Antenne wesentlich verschoben. Bei Überschreiten eines bestimmten, von der Anordnung im einzelnen abhängigen Werts für das Pegelverhältnis der Signale aus zusätzlicher Antenne : Richtantenne wird auf das Vorliegen von Regenechos erkannt und die Auswertung der Echosignale, z. B. in einer Geländefolgesteuerung unterdrückt.

Eine vorteilhafte Ausführungsform sieht die Ergänzung der Anordnung durch eine weitere Empfangsantenne vor, die gleichsinnig zu der Richtantenne polarisiert ist. Die weitere Antenne und die zusätzliche Antenne haben annähernd gleiche Diagramme, die innerhalb des zu überwachenden Raumwinkelbereichs eine annähernd konstante Empfindlichkeit aufweisen. Für die weitere Antenne und die zusätzliche Antenne können dann vorteilhafterweise billige und platz- und gewichtsparende Hornantennen oder offene Hohlleiterstrahler verwandt werden. Da die weitere Antenne und die Richtantenne zwar gleich polarisiert sind, ihre Diagramme aber stark voneinander abweichen, können über einen weiteren Pegelvergleich der Empfangssignale dieser beiden Antennen Empfangssignale durch Nebenkeulenempfang bei der Richtantenne erkannt und daraus resultierende Fehler vermieden werden.

Gemäß einer günstigen Weiterbildung ist vorgesehen, für die Erkennung von Regenechos anstelle der Empfangssignale von der Richtantenne die Empfangssignale der weiteren Antenne dem Pegelvergleicher zuzuführen. Beide an den Pegelvergleicher angeschlossenen Antennen haben dann gleiche Diagramme.

Eine bevorzugte Ausführungsform sieht die Verwendung einer für links- und rechtszirkulare Polarisation eingerichteten Antenne anstelle der Ausführungsform mit getrennter zusätzlicher Antenne und weiterer Antenne vor.

Die Erfindung ist nachfolgend am Beispiel einer Radaranordnung für ein Geländefolgeradar anhand der Abbildungen noch veranschaulicht. Dabei zeigt

Fig. 1 den zu überwachenden Raumwinkelbereich mit den Antennendiagrammen

Fig. 2 die Antennendiagramme in kartesischer Darstellung

Fig. 3 eine Ausführungsform der Erfindung.

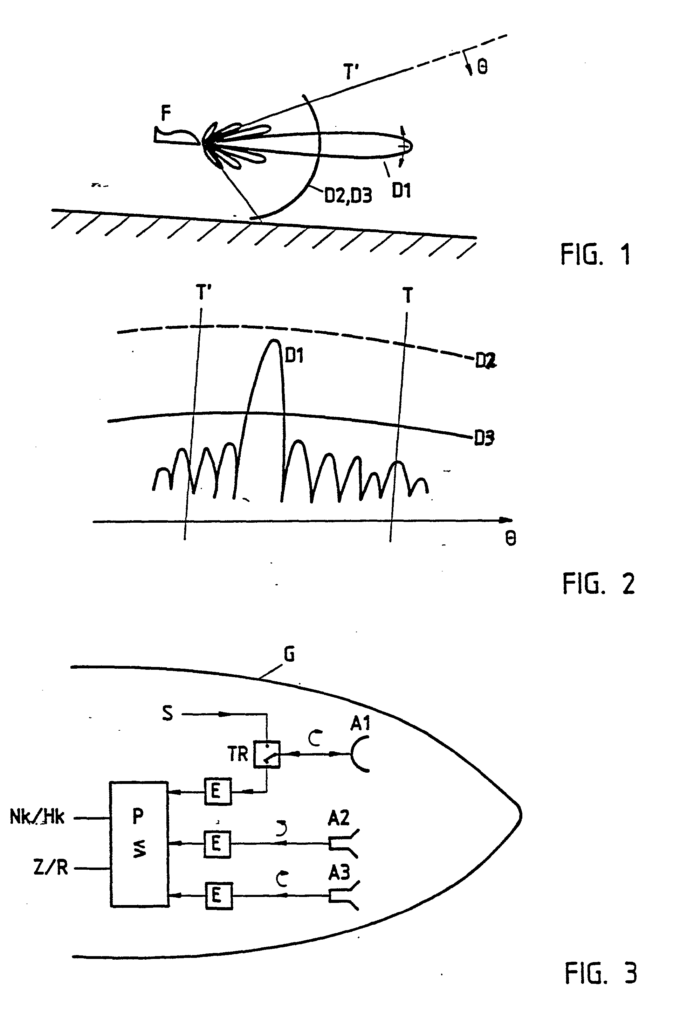

Der zu überwachende Raumwinkelbereich, der in Fig. 1 durch die Geraden T, T' begrenzt ist, ist entsprechend der Aufgabe des Geländefolgeradars zur Kontrolle der relativ geringen Flughöhe des Flugzeugs F über dem Erdboden und zur Erkennung von Hindernissen in Flugrichtung ausgelegt. Das scharf gebündelte Richtdiagramm D1 der Sende/Empfangsantenne ist schwenkbar und tastet auf diese Weise den gesamten Raumwinkelbereich ab. Das Diagramm D2 der zusätzlichen Antenne und das gleich geformte Diagramm D3 der weiteren Antenne sind fest und weisen über den gesamten Raumwinkelbereich eine annähernd konstante Empfindlichkeit auf.

Fig. 2 zeigt den Verlauf der Antennendiagramme relativ zueinander in kartesischer Auftragung über dem Elevationswinkel θ. Die beiden rechts zirkular polarisierten Diagramme D1 der Richtantenne und D3 der weiteren Antenne erlauben aufgrund ihres unterschiedlichen Verlaufs durch Vergleich der Pegel der über diese Diagramme empfangenen Signale eine Unterscheidung von Signalen, die über die Hauptkeule der Richtantenne aufgenommen werden, gegenüber Signalen, die über die Nebenkeulen aufgenommen werden.

Für Echos mit statisch vertikaler Polarisation, wie z. B. Bodenechos, zeigen die zusätzliche Antenne und die weitere Antenne die gleiche Empfindlichkeit. Für die links zirkular polarisierten Regenechos ist demgegenüber die Empfindlichkeit der weiteren Antenne (und der Richtantenne) erheblich geringer, während die Empfindlichkeit der zusätzlichen, links zirkular polarisierten Antenne zunimmt. Diese relative Verschiebung der Empfindlichkeit ist durch die gestrichelt eingezeichnete Linie für die zusätzliche Antenne angedeutet.

Die Antennenanordnung der Fig. 3 ist durch ein Radom G geschützt und enthält eine Sende/Empfangs-Richtantenne A1 mit schwenkbarem, scharf gebündeltem Richtdiagramm, einen Hornstrahler A2 als zusätzliche Empfangsantenne und einen zweiten Hornstrahler A3 als weitere Empfangsantenne. Der Antenne A1 wird über einen Sende-/Empfangs-Umschalter TR das Sendesignal S zugeführt, das sie als rechts zirkular polarisierte Welle abstrahlt. Von den zur Antennenanordnung reflektierten Echostrahlung werden von den Antennen A1 und A3 nur die rechts zirkular polarisierten, in der Antenne A2 nur die links zirkular polarisierten Anteile aufgenommen und auf die angeschlossenen Empfangskanäle E geleitet. Die Ausgangssignale der Empfangskanäle werden einem Pegelvergleicher P zugeführt, der durch Vergleich der Signalpegel zwischen Hauptkeulen (HK)- und Nebenkeulen· (NK)-Empfang der Richtantenne und zwischen Zielecho Z und Regenecho R unterscheidet.

Die Erfindung ist aufgrund des geringen Raumbedarfs und Gewichts und der Möglichkeit, neben Regenechos auch auf einfache Weise Nebenzipfelechos in der beschriebenen Weise zu unterdrücken, besonders für die Anwendung in einem Geländefolge-Radarsystem eines Flugzeugs geeignet.

**Patentansprüche**

1. Radaranordnung mit einer zirkular polarisierten Sende-Empfangs-Richtantenne (A1) mit einem scharf gebündelten Antennenrichtdiagramm, mit einer zusätzlichen, zur Richtantenne orthogonal zirkular polarisierten Antenne (A2) und mit einem Pegelvergleicher (P), der das Verhältnis der Signalpegel der über die Richtantenne (A1) und die zusätzliche Antenne (A2) empfangenen Echosignale bildet und bei Überschreiten eines vorgegebenen Werts ·für dieses Pegelverhältnis die weitere Auswertung der Echosignale unterdrückt, dadurch gekennzeichnet, daß das Richtdiagramm (D1) der Richtantenne (A1) innerhalb eines zu überwachenden Raumwinkelbereichs schwenkbar ist, und daß die zusätzliche Antenne (A2) als Empfangsantenne mit einem festen Antennendiagramm (D2), das innerhalb des zu überwachenden Raumwinkelbereichs eine annähernd konstante Empfindlichkeit aufweist, ausgeführt ist.

2. Anordnung nach Anspruch 1, dadurch gekennzeichnet, daß eine weitere Empfangsantenne (A3) vorhanden ist mit zur Richtantenne gleichsinnig zirkularer Polarisation und mit einem gleichen Diagramm wie die zusätzliche Antenne und daß der Pegelvergleicher (P) bei Überschreiten eines weiteren vorgegebenen Werts für das Pegelverhältnis der Echossignale von der Richtantenne (A1) und der weiteren Empfangsantenne (A3) ebenfalls eine weitere Auswertung der Echosignale unterdrückt.

3. Anordnung nach Anspruch 2, dadurch gekennzeichnet, daß dem Pegelvergleicher anstelle des Empfangssignals der Richtantenne das Empfangssignal der weiteren Antenne zugeführt ist.

4. Anordnung nach Anspruch 2 oder 3, dadurch gekennzeichnet, daß die zusätzliche Antenne und die weitere Antenne als Hornstrahler oder offene Hohlleiterstrahler ausgebildet sind.

5. Anordnung nach einem der Ansprüche 2 bis 4, dadurch gekennzeichnet, daß die zusätzliche Antenne und die weitere Antenne in einer in beiden zirkularen Polarisationen betreibbaren Antenne vereinigt sind.

6. Anordnung nach einem der Ansprüche 1 bis 5, dadurch gekennzeichnet, daß die Antennen und Pegelvergleicher Bestandteil eines Geländefolge-Radarsystems sind.

## Claims

1. Radar arrangement with a circularly polarised directional transmitting-receiving aerial (A1) with a sharply beamed aerial directional diagram, with an additional aerial (A2), which is circularly polarised orthogonally to the directional aerial, and with a level comparator (P), which forms the ratio of the signal levels of the echo signals received by way of the directional aerial (A1) and the additional aerial (A2) and suppresses the further evaluation of the echo signals on a predetermined value of this level ratio being exceeded, characterised thereby, that the directional diagram (D1) of the directional aerial (A1) is pivotable within a solid angle range to be monitored and that the additional aerial (A2) is constructed as receiving aerial with a fixed aerial diagram (D2), which displays a nearly constant sensitivity within the solid angle range to be monitored.

2. Arrangement according to claim 1, characterised thereby, that a further receiving aerial (A3) is present with a circular polarisation in the same sense as that of the directional aerial and with a diagram like that of the additional aerial and that the level comparator (P) likewise suppresses a further evaluation of the echo signals on a further predetermined value of the level ratio of the echo signals received by way of the directional aerial (A1) and the further receiving aerial (A3) being exceeded.

3. Arrangement according to claim 2, characterised thereby, that the received signal of the further aerial is fed to the level comparator in place of the received signal of the directional aerial.

4. Arrangement according to claim 2 or 3, characterised thereby, that the additional aerial and the further aerial are constructed as horn radiators or as open waveguide radiators.

5. Arrangement according to one of the claims 2 to 4, characterised thereby, that the additional aerial and the further aerial are combined in an aerial operable in both circular polarisations.

6. Arrangement according to one of the claims 1 to 5, characterised thereby, that the aerials and the level comparator are components of a ground-tracking radar system.

## Revendications

1. Dispositif radar comprenant une antenne émettrice-réceptrice directive (A1) polarisée circulairement, ayant un diagramme d'antenne directif fortement concentré, une antenne supplémentaire (A2) à polarisation circulaire orthogonale par rapport à l'antenne directive, ainsi qu'un comparateur de niveaux (P) qui forme le rapport des niveaux de signal des signaux d'écho reçus par l'antenne directive (A1) et l'antenne supplémentaire (A2) et qui, en cas de dépassement d'une valeur prédéterminée pour ce rapport de niveaux, supprime la poursuite de l'exploitation des signaux d'écho, caractérisé en ce que le diagramme directif (D1) de l'antenne directive (A1) peut être animé d'une rotation à l'intérieur d'une zone d'angle solide à surveiller et que l'antenne supplémentaire (A2) est réalisée comme une antenne réceptrice avec un diagramme d'antenne fixe (D2) qui présente une sensibilité à peu près constante à l'intérieur de la zone d'angle solide à surveiller.

2. Dispositif selon la revendication 1, caractérisé en ce qu'il comprend une antenne réceptrice additionnelle (A3) qui est polarisée circulairement dans le même sens que l'antenne directive et qui possède le même diagramme que l'antenne supplémentaire et que le comparateur de niveaux (P), en cas de dépassement d'une autre valeur prédéterminée pour le rapport des niveaux des signaux d'écho de l'antenne directive (A1) et de l'antenne réceptrice additionnelle (A3), supprime également une exploitation ultérieure des signaux d'écho.

3. Dispositif selon la revendication 2, caractérisé en ce que le comparateur de niveaux reçoit, à la place du signal reçu par l'antenne directive, le signal reçu par l'antenne additionnelle.

4. Dispositif selon la revendication 2 ou 3, caractérisé en ce que l'antenne supplémentaire et l'antenne additionnelle sont réalisées comme des radiateurs en cornet ou comme des antennes à guide d'ondes ouvertes.

5. Dispositif selon l'une des revendications 2 à 4, caractérisé en ce que l'antenne supplémentaire et l'antenne additionnelle sont réunies en une antenne que l'on peut utiliser avec les deux polarisations circulaires.

6. Dispositif selon l'une des revendications 1 à 5, caractérisé en ce que les antennes et le comparateur de niveaux font partie d'un système radar de suivi de terrain.

FIG. 1

FIG. 2

FIG. 3